# FASCICULE DE BREVET EUROPEEN

(11) **EP 4 548 876 B1**
(45) Date de publication et mention de la délivrance du brevet: **29.04.2026**
(21) Numéro de dépôt: 24210054.3
(22) Date de dépôt: 31.10.2024
(51) Int. Cl.: A61C 7/10, A61C 7/36

(54) **KIT COMPRENANT UN APPAREIL ORTHODONTIQUE D'EXPANSION PALATINE ET DE DISTALISATION**
KIT MIT EINER ORTHODONTISCHEN VORRICHTUNG ZUR PALATINALEN EXPANSION UND DISTALISIERUNG
KIT COMPRISING AN ORTHODONTIC APPARATUS FOR PALATINAL EXPANSION AND DISTALIZATION

(30) Priorité: 01.11.2023 FR 2311909
(43) Date de publication de la demande: 07.05.2025
(73) Titulaire: Smilers Lab, 73000 Chambéry (FR)
(72) Inventeur: DROY, Hubert, 73370 BOURDEAU (FR)
(74) Mandataire: Hautier IP

(56) Documents cités:
- CN-U- 202 136 431
- CN-U- 219 089 712
- US-A1- 2013 252 195

## Description

### DOMAINE DE L'INVENTION

La présente invention se rapporte à un appareil d'orthodontie qui combine à la fois les fonctions de disjoncteur et de distaleur.

### ART ANTERIEUR

Les mâchoires sont deux structures osseuses opposables qui forment la bouche.

Chez les mammifères, la mâchoire inférieure ou arcade dentaire maxillaire inférieure correspond au composant mobile, on parle de la « mandibule ».

La mâchoire supérieure ou arcade dentaire maxillaire supérieure est plus ou moins fixée au squelette. Cette dernière est appelée le « maxillaire » et elle est composée de deux os qui sont fusionnés dans la ligne médiane par une suture. Les os maxillaires forment le toit de la bouche, le plancher.

Dans certains cas, cette mâchoire supérieure peut s'avérer trop étroite. C'est par exemple le cas pour le palais ogival qui correspond à une malformation associée à un palais étroit et profond qui rétrécit les fosses nasales. Une telle malformation peut résulter de maladies génétiques telles que le syndrome de CROUZON, le syndrome de DOWN (trisomie 21) ou le syndrome de TURNER. A noter que, outre la problématique esthétique pour le patient, une telle malformation peut également affecter la qualité de sa respiration.

Pour remédier à une telle étroitesse de l'arcade maxillaire, on réalise une expansion maxillaire qui permet de rétablir l'équilibre entre la largeur des mâchoires (maxillaire et mandibule) et, simultanément, de faciliter le passage de l'air dans la cavité nasale. Chez l'adulte, cette expansion maxillaire se fait par une technique chirurgicale appelée *Expansion Palatine Rapide Assistée Chirurgicalement* (EPRAC). Maintenant, cette expansion maxillaire est possible chez l'enfant par une procédure orthodontique sans intervention chirurgicale du fait d'une suture palatine encore non consolidée. La technique utilisée chez l'enfant repose sur un appareil d'orthodontie appelé disjoncteur intermaxillaire ou disjoncteur palatin.

Ce disjoncteur palatin est fixé sur des molaires définitives droite et gauche de l'arcade maxillaire par des bagues. Les bagues droite et gauche du disjoncteur palatin sont reliées, par des bras de rétention, à un écarteur central intégrant une vis d'expansion permettant son activation (c'est-à-dire son écartement).

L'activation du disjoncteur palatin se fait généralement 1 à 2 fois par jour et va générer une force qui va séparer les deux os du palais au niveau de la suture intermaxillaire, ceci à un rythme d'environ ¼ à ½ mm par jour. Cette période d'activation dure généralement 2 à 4 semaines et est suivie d'une période de rétention (environ 3 mois) durant laquelle l'appareil reste en bouche, mais sans activation supplémentaire de la vis d'expansion. Cette période de rétention est essentielle pour permettre la calcification de la zone d'ouverture de la suture intermaxillaire et ainsi la stabilisation de l'expansion du maxillaire.

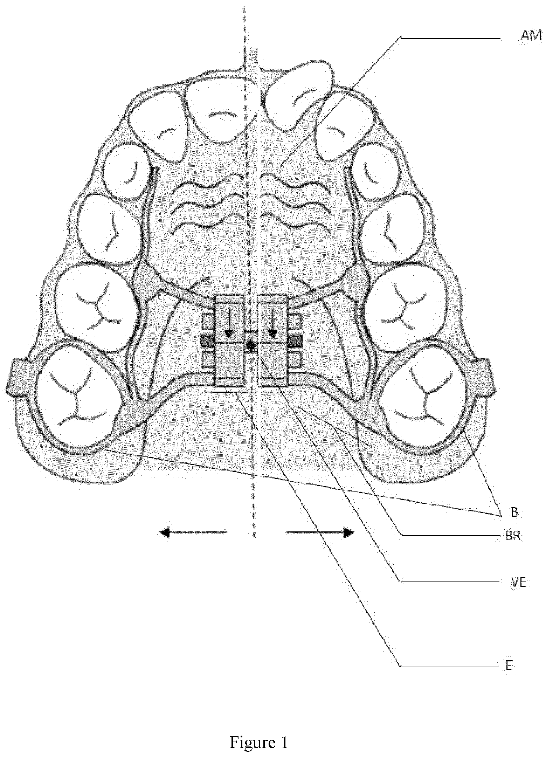

La figure 1 montre un disjoncteur palatin de l'art antérieur qui est constitué de deux bagues (B) positionnées, au niveau des dents 16 et 26 (1^{ère} molaire), et auxquelles sont soudées des bras de rétention (BR) qui s'appuient sur la face palatine des dents. Ces bras de rétention permettent le couplage entre les bagues (et les surfaces d'appui sur les dents) et un écarteur (E) central comprenant une vis d'expansion (VE). L'activation progressive et périodique de l'écarteur (E) central au moyen d'une clé permettant de tourner la vis d'expansion (VE) de l'écarteur (E) central et ainsi d'écarter l'arcade maxillaire (AM). Il est à noter que, dans certains cas et comme le décrit notamment la demande de brevet US 2013/252195, le disjoncteur palatin peut comprendre non pas deux, mais quatre bagues positionnées alors le plus souvent au niveau des dents 14 et 24 (1^{ère} prémolaire) et des dents 16 et 26 (1^{ère} molaire).

Maintenant, il est parfois nécessaire d'effectuer, en plus de cette disjonction, d'autres corrections au niveau du maxillaire. Il est ainsi possible de devoir améliorer la position relative d'une succession de dents. Un tel correctif est, dans ce cas, réalisé à l'aide d'un distaleur qui est un appareil d'orthodontie distinct qui est prévu pour faire reculer une ou plusieurs dents. Les techniques de distalisation vont différer selon la ou les dents que l'on veut traiter avec, pour chacune d'entre elles, des dispositifs orthodontiques dédiés.

Des dispositifs de type distaleur destinés à faire reculer une succession de plusieurs dents à partir d'une molaire sont ainsi connus et sont notamment décrits dans les brevets Européens EP 1 433 435 B1, EP 1 649 824 B1, EP 1 681 033 B1 et EP 3 560 453 B1 et dans le brevet Français FR 2 979 225B1.

Pour les patients nécessitant une disjonction intermaxillaire et une distalisation maxillaire, les praticiens vont donc devoir combiner ces deux appareils (disjoncteur et distaleur). Maintenant, une telle combinaison, outre qu'elle nécessite de réaliser une empreinte pour chaque appareil à réaliser, va surtout entrainer un important temps de traitement. En effet, il sera nécessaire de finaliser la disjonction intermaxillaire, en laissant le disjoncteur palatin en place jusqu'à calcification de la zone de la suture intermaxillaire, avant de pouvoir retirer ce disjoncteur palatin et de pouvoir mettre en place le distaleur pour initier cette fois la distalisation.

Il va sans dire que la pose consécutive de deux appareils et le temps de traitement associés constituent autant de désagréments pour les patients.

### SOMMAIRE DE L'INVENTION

Face à cette problématique, l'inventeur a maintenant développé un nouvel appareil qui cumule les fonctions de disjoncteur et de distaleur. L'appareil est à même de réaliser une disjonction puis, lorsque celle-ci est arrivée à son terme, de réaliser une distalisation sans compromettre l'immobilisation de l'arcade maxillaire nécessaire à la calcification de la zone d'ouverture de la suture intermaxillaire.

L'appareil selon l'invention permet de traiter ces deux problèmes d'orthodontie simultanément, lesquels étaient habituellement traités l'un après l'autre au moyen d'un disjoncteur puis d'un distaleur. Le temps de traitement s'en trouve réduit, car la distalisation peut être initiée sans avoir à attendre la fin de la stabilisation de l'expansion du maxillaire qui dure à minima 3 mois. De ce fait, l'inconfort pour le patient s'en trouve nettement réduit.

L'appareil selon l'invention est en outre moins coûteux que les deux appareils. Il ne nécessite qu'une seule empreinte de départ par le praticien et aucune dépose de cet appareil n'est nécessaire lors du passage de la disjonction à la distalisation.

En conséquence, un premier objet de l'invention porte sur un kit selon la revendication 1 et comprenant un tel appareil d'orthodontie.

Un deuxième objet de l'invention porte sur appareil d'orthodontie selon la revendication 9.

### DESCRIPTION DES FIGURES

La figure 1 montre un disjoncteur palatin selon l'art antérieur.
La figure 2 montre un mode de réalisation de l'appareil selon l'invention, après sa pose sur le maxillaire du patient, et avant de débuter la première phase de disjonction.
La figure 3 montre le même mode de réalisation de l'appareil selon l'invention, au terme de la première phase de disjonction.
La figure 4 montre le même mode de réalisation de l'appareil selon l'invention, au terme de la première phase de disjonction.
La figure 5 montre un mode de réalisation préféré pour l'ensemble de distalisation à intégrer à l'appareil d'orthodontie selon l'invention.

### DESCRIPTION DETAILLEE DE L'INVENTION

Les écarteurs adaptés pour effectuer une disjonction de l'arcade maxillaire sont bien connus de l'homme du métier et prennent la forme d'un vérin. Comme explicité précédemment, ces écarteurs (ex : écarteur HYRAX ; DENTAURUM) comportent deux parties (droite et gauche) connectées par une vis d'expansion. Cette vis d'expansion est percée par au moins 2 trous (en général 4 qui sont alors distants entre eux de 45°). L'insertion d'une clé dans le trou accessible de la vis d'expansion, permet de mettre en mouvement cette vis d'expansion par un mouvement de rotation de la clé, laquelle rotation entraine l'activation de l'écarteur et donc l'écartement de l'arcade maxillaire. A titre d'exemple de tels écarteurs, on peut citer ceux décrits dans les demandes PCT WO9302629, WO9520924, WO9810708A1, WO03071976A1, WO2008141314A1, WO 2012/120447 et WO2016120897.

Avantageusement, la vis d'expansion de l'écarteur comprend une butée. Une telle butée permet d'arrêter la disjonction une fois atteint la valeur d'écartement souhaitée pour l'arcade maxillaire et, de préférence, d'empêcher la dislocation de l'écarteur.

Avantageusement encore, l'écarteur peut comprendre un système anti-retour. Un tel système anti-retour permet d'assurer une disjonction sûre et efficace en empêchant les mauvaises manipulations de la vis d'expansion.

L'écarteur peut encore comprendre un repère visuel indiquant, à l'utilisateur, le sens de rotation de la vis d'expansion. Un tel repère visuel peut être simplement matérialisé par une flèche. Une telle flèche peut être réalisée lors de la fabrication de l'écarteur ou, à posteriori, par un marquage laser.

Les bras de rétention utilisés dans les dispositifs de type disjoncteur sont bien connus de l'homme du métier. Il s'agit d'éléments rigides qui prennent la forme de fils métalliques de section adaptée (diamètre 1 mm ou plus). Lors de la pose de l'appareil, le praticien peut adapter simplement la forme des bras de rétention par cintrage.

Chaque bras de rétention du premier couple symétrique de bras de rétention postérieurs comprend un ou plusieurs de points de rupture prédéterminés dans sa longueur. De préférence, chacun de ces bras de rétention comprend au moins deux points de rupture prédéterminés avec un premier localisé à proximité de l'écarteur central et un second localisé à proximité de la bague à laquelle est couplé ce bras de rétention. De la sorte, et une fois la valeur de disjonction atteinte, le praticien pourra supprimer ce bras de rétention de sorte à rendre possible la distalisation. Consécutivement à cette suppression du premier couple symétrique de bras de rétention postérieurs, le praticien pourra, simplement et à l'aide des instruments à sa disposition, éliminer les angles du ou des points de rupture utilisés, de sorte à ne pas risquer de blesser le patient.

Les bagues du premier couple de bagues sont avantageusement fixées sur les dents 16 et 26 (1^{ère} molaire). La taille de ces bagues est définie, pour chaque patient, en fonction de la taille de la dent à venir encercler. Chaque bague est ensuite entrée de force par le praticien et vient s'ajuster autour de la molaire correspondante.

Avantageusement, et en guise de renfort, les bras de rétention (postérieur et antérieur) gauches et/ou les bras de rétention (postérieur et antérieur) droits sont reliés par un fil de renfort palatin. Un tel fil de renfort palatin prend typiquement la forme d'un fil métallique rigide (ex : fil REMALOY, romanium, ø 1,0 mm) qui est lié (ex : soudage au laser) aux bras de rétention (postérieur et antérieur) gauches et/ou droits. De préférence, ce fil de renfort palatin vient en appui sur la face palatine des dents se trouvant à proximité. Un tel appui est de nature à permettre une meilleure répartition des forces d'expansion et à améliorer l'efficacité de l'appareil d'orthodontie correspondant.

Avantageusement encore, et dans le cas où l'appareil selon l'invention intègrerait un tel fil de renfort palatin, ce fil de renfort palatin comprendra un ou plusieurs de points de rupture prédéterminés dans sa longueur. De préférence, ce fil de renfort palatin comprend au moins deux points de rupture prédéterminés avec un premier localisé à proximité du bras de rétention postérieur et un second localisé à proximité du bras de rétention antérieur. De la sorte, et une fois la valeur de disjonction atteinte, le praticien pourra supprimer ce fil de renfort palatin en même temps qu'il installe le dispositif de distalisation. Cette suppression est en effet essentielle pour rendre possible la distalisation. Consécutivement à cette suppression du fil de renfort palatin, le praticien pourra, simplement et à l'aide des instruments à sa disposition, éliminer les angles du ou des points de rupture utilisés, de sorte à ne pas risquer de blesser le patient.

En lien avec l'appui du couple de bras de rétention antérieurs, un tel appui peut prendre la forme d'un second couple de bagues, en ce cas généralement fixées sur les dents 14 et 24 (1^{ère} prémolaire). Maintenant, cet appui prendra de préférence la forme d'un fil métallique rigide, typiquement d'un prolongement du fil de renfort palatin en avant du bras de rétention antérieur lorsqu'un tel fil de renfort palatin est présent. Un tel fil métallique rigide vient alors typiquement en appui sur la face palatine des dents 14 et 24 (1ère prémolaire) et pourra s'étendre sur la face palatine des dents au-delà (13 et 23 au moins). De préférence, chaque bras de rétention antérieur est couplé à un fil métallique rigide (ex : par soudage), correspondant à un prolongement du fil de renfort palatin lorsqu'il est présent, qui vient en appui sur la face palatine d'au moins une dent en avant de ce bras de rétention antérieur.

Dans le cas où l'appui du couple de bras de rétention antérieurs sur la face palatine de dents en avant des molaires droite et gauche auxquelles sont fixées le premier couple de bagues droite et gauche prend la forme d'un fil métallique rigide, cet appui palatin pourra être couplé à un appui occlusal complémentaire (sur le dessus des dents), lequel appui occlusal permet d'empêcher un enfoncement (apical) de l'appareil dans les tissus. De préférence encore, chaque fil métallique rigide qui vient en appui sur la face palatine d'au moins une dent en avant du bras de rétention antérieur est couplé à au moins un second fil métallique rigide (ex : par soudage) qui constitue un appui occlusal. Pour améliorer encore la tenue de l'appareil selon l'invention, un tel appui occlusal pourra être collé à la dent.

Concernant le second couple symétrique de bras de rétention postérieurs, ses deux articulations (une pour chaque bras de ce second couple de bras de rétention postérieurs) sont essentielles pour la phase de distalisation.

Lorsque la phase de disjonction est terminée, le praticien supprime en effet le premier couple de bras de rétention postérieurs (et les fils de renforts palatins associés s'ils sont présents). Cette suppression permet de retirer le bridage sur les deux articulations de ce second couple symétrique de bras de rétention postérieurs. Ces deux articulations vont alors conférer à l'appareil un degré de liberté supplémentaire (permettant une articulation au niveau des bagues) nécessaire à la distalisation, tout en permettant le maintien de l'écartement de l'arcade maxillaire nécessaire à l'étape de rétention de la disjonction.

Avantageusement, chaque articulation prend la forme d'une rotule et, de préférence, d'une rotule sphérique.

Concernant cette fois la distalisation, il a été précisé précédemment qu'au moins une des bagues du premier couple de bagues constitue l'élément distal d'un ensemble pour la distalisation d'une succession de plusieurs dents à partir de la molaire sur laquelle est fixée cette bague, lequel ensemble de distalisation comprend au moins deux éléments.

De tels ensembles de distalisation comprenant au moins deux éléments et destinés à faire reculer une succession de plusieurs dents à partir d'une molaire sont bien connus de l'homme du métier et sont décrits notamment dans les brevets Européens EP 1 433 435 B1 et EP 3 560 453 B1 et dans le brevet Français FR 2 979 225B1.

En vue d'effectuer la distalisation, un organe de rappel est accroché à la partie antérieure de l'ensemble de distalisation (en général un lien élastique fermé sur lui-même) et à un élément de retenue (en général une platine avec un crochet) fixé à une dent de la mandibule selon une disposition classique connue.

Selon un premier mode de réalisation, et sur la base de l'enseignement du brevet EP 1 433 435 B1, un tel ensemble pour la distillation comprendrait :
1) un élément distal comprenant une bague fixée sur la molaire avec, sur sa face vestibulaire, un boitier d'accouplement, et
2) un élément mésial qui peut être fixé par sa base à une canine (ex : colle ou ciment) en avant de la molaire, lequel élément mésial comprend une saillie antérieure ayant une partie extérieure qui permet la rétention d'un élément élastique (auquel est associé cet ensemble pour permettre la distalisation) et une saillie postérieure arquée terminée par une articulation sphérique à son bout,

Où l'articulation sphérique de l'élément mésial est introduite dans le boitier d'accouplement de l'élément distal.

Le détail des structures possibles de l'élément mésial et du boitier d'accouplement sont décrits en détail dans le brevet EP 1 433 435 B1 et ne sont donc pas décrits ici plus avant.

Selon un second mode de réalisation, et sur la base de l'enseignement du brevet FR 2 979 225B1, les références numériques qui suivent sont celles utilisées dans ce brevet Français), un tel ensemble pour la distalisation comprendrait :
1) un élément distal, correspondant à la tête arrière de l'ensemble de distalisation, comprenant une bague fixée sur la molaire et pourvue, sur sa surface vestibulaire, d'un accessoire de montage qui comporte un fourreau ;
2) une tête de fixation avant qui comprend une platine d'adaptation sur une canine et une tige coudée qui porte cette platine ; et
3) un élément intermédiaire comprenant un bras antéro-postérieur et deux articulations à l'opposé l'une de l'autre sur le bras antéro-postérieur dont une articulation associe le bras antéro-postérieur avec la tête de fixation avant et l'autre articulation associe le bras antéro-postérieur avec l'accessoire de montage fixé sur la face vestibulaire de la bague.

Dans ce mode de réalisation, une portion de la tige coudée à l'opposé de l'élément intermédiaire est en saillie globalement et forme un crochet d'attache d'un organe de rappel de l'ensemble de distalisation globalement vers l'arrière.

Les exemples qui suivent sont fournis à titre d'illustration et ne sauraient limiter la portée de la présente invention.

### Réalisation d'une disjonction et d'une distalisation successives sur le maxillaire d'un patient

Dans une première phase, le praticien effectue une empreinte du maxillaire du patient.

Cette empreinte permet la réalisation d'un appareil d'orthodontie selon l'invention (1) présentant les dimensions adaptées pour être mis en place au niveau de ce maxillaire et, également, pour permettre la disjonction et la distalisation souhaitées.

Une fois l'appareil d'orthodontie (1) réalisé, le praticien va le mettre en place sur le maxillaire du patient.

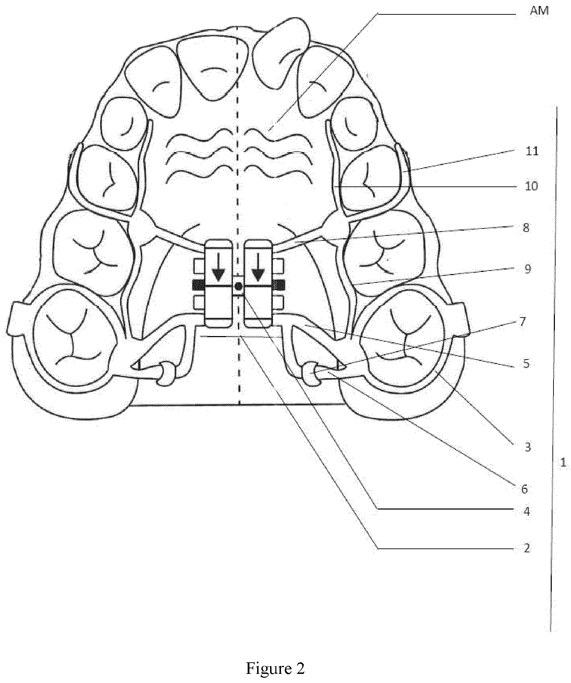

La figure 2 montre un appareil d'orthodontie selon l'invention (1) pour la première phase de distalisation. Celui-ci est constitué de deux bagues (3) positionnées, au niveau des dents 16 et 26 (1^{ère} molaire), et auxquelles sont soudées un premier couple symétrique de bras de rétention postérieurs (5) et un second couple symétrique de bras de rétention postérieurs (6) dont chacun comprend une rotule (7). Ces bras de rétention (5, 6) permettent le couplage entre les bagues (3) et un écarteur (2) central comprenant une vis d'expansion (4). L'écarteur (2) central est solidaire d'un couple symétrique de bras de rétention antérieurs (8) qui vient en appui sur la face palatine de dents en avant des molaires droite et gauche auxquelles sont fixées le premier couple de bagues (3) droite et gauche. Un fil de renfort palatin (9) relie les bras du premier couple symétrique de bras de rétention postérieurs (5) aux bras du couple symétrique de bras de rétention antérieurs (8). Un prolongement du fil de renfort palatin (10) en avant du bras de rétention antérieur vient en appui sur la face palatine des dents. Ce prolongement du fil de renfort palatin (10) est couplé à un appui occlusal (11) prenant la forme d'un fil métallique rigide. L'activation progressive et journalière de l'écarteur (2) central au moyen d'une clé permettant de tourner la vis d'expansion (4) de l'écarteur (2) central et ainsi d'écarter l'arcade maxillaire (AM) jusqu'à arriver à la valeur souhaitée.

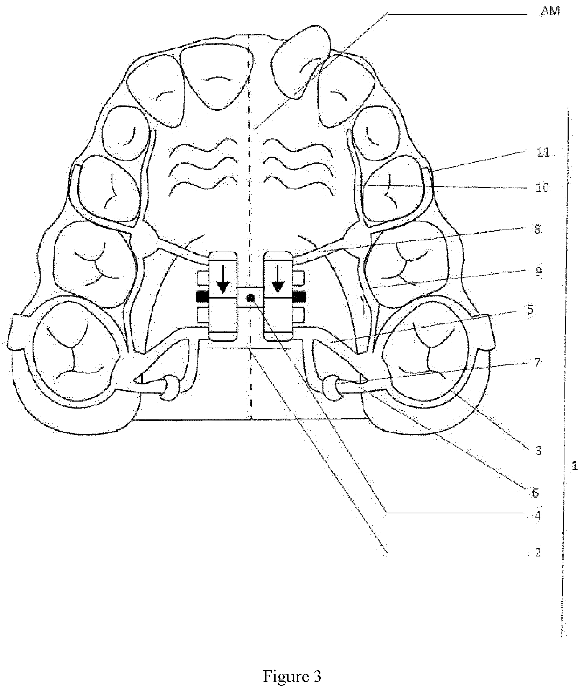

La figure 3 montre ce même appareil (1) selon l'invention au terme de la phase de disjonction de l'arcade maxillaire (AM).

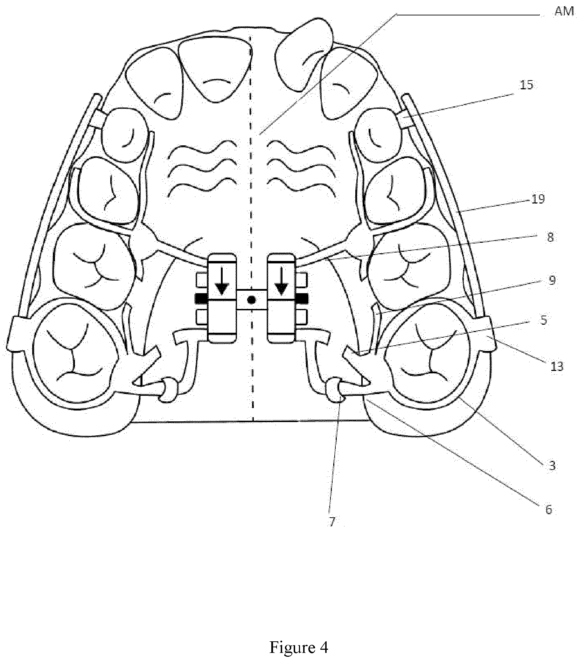

Comme illustré sur la figure 4, le praticien procède alors à la suppression du premier couple symétrique de bras de rétention postérieurs (5) de sorte à retirer le bridage sur les deux rotules (7) du second couple symétrique de bras de rétention postérieurs (6). L'appareil selon l'invention permet ainsi de maintenir l'écartement de l'arcade maxillaire (AM) pendant la phase de rétention. Le praticien procède alors à la suppression du fil de renfort palatin (9) reliant les bras de rétention du premier couple de bras de rétention postérieurs (5) au couple de bras de rétention antérieurs (8). La suppression de ce lien est en effet nécessaire pour permettre la distalisation. Pour réaliser cette phase de distalisation, le praticien met en place l'ensemble pour la distalisation d'une succession de plusieurs dents à partir de la molaire sur laquelle est fixée la bague (3) qui comprend un accessoire de montage (13) qui se connecte à un bras antéro-postérieur (19), lequel bras antéro-postérieur (19) est connecté à une tête de fixation avant (15) fixée sur une canine.

Pour effectuer la distalisation, le praticien met en place un élément de retenue sur une molaire de la mandibule en dessous de l'ensemble de distalisation et connecte cet élément de retenue et la partie antérieure de l'ensemble de distalisation avec un organe de rappel pour permettre la distalisation. Un tel élément de retenu prend la forme d'une platine de montage avec un crochet et l'organe de rappel prend la forme d'un élastique.

A l'issu d'une période d'au moins 3 mois, qui permet de finaliser la phase de rétention de la disjonction et, simultanément, la phase de distalisation, le praticien peut retirer l'appareil du maxillaire du patient.

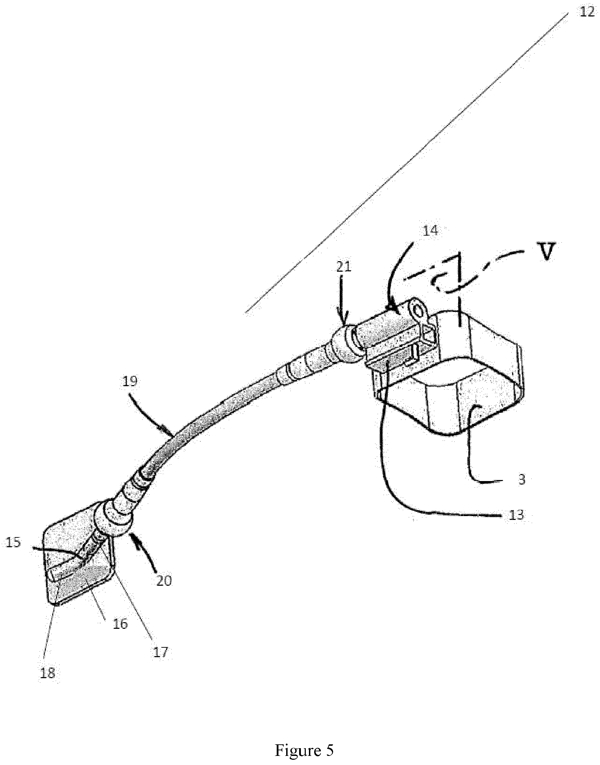

Le mode de réalisation préféré de l'ensemble de distalisation (12) est décrit à la figure 5 et comprend dans le détail :
1- la bague (3) fixée sur la molaire, et à laquelle est couplé l'écarteur (2, non représenté sur cette figure), pourvu sur sa face vestibulaire (V) d'un accessoire de montage (13) qui comporte un fourreau (14)
2- une tête de fixation avant (15) qui comprend une platine d'adaptation (16) sur une canine et une tige coudée (17) qui porte cette platine (16). Une portion de cette tige coudée (17) forme un crochet (18) d'attache d'un organe de rappel de l'ensemble de distalisation (12) globalement vers l'arrière.
3- un ensemble intermédiaire comprenant un bras antéro-postérieur (19) et deux articulations (20, 21) à l'opposée l'une de l'autre sur le bras antéro-postérieur (19) dont une articulation (20) associe le bras antéro-postérieur (19) avec la tête de fixation avant (15) et l'autre articulation (21) associe le bras antéro-postérieur (19) avec l'accessoire de montage (13) fixé sur la face vestibulaire (V) de la bague (3).

Liste des références
1 : appareil d'orthodontie
2 : écarteur
3 : bagues du premier couple de bague
4 : vis d'expansion de l'écarteur
5 : bras de rétention du premier couple symétrique de bras de rétention postérieurs
6 : bras de rétention du second couple symétrique de bras de rétention postérieurs
7 : articulation des bras de rétention du second couple symétrique de bras de rétention postérieurs
8 : bras du couple symétrique de bras de rétention antérieurs
9 : fil de renfort palatin reliant les bras du premier couple symétrique de bras de rétention postérieurs aux bras du couple symétrique de bras de rétention antérieurs
10 : prolongement du fil de renfort palatin en avant du bras de rétention antérieur, lequel vient en appui sur la face palatine des dents
11 : appui occlusal
12 : ensemble de distalisation
13 : accessoire de montage
14 fourreau
15 : tête de fixation avant
16 : platine d'adaptation
17 : tige coudée
18 : crochet d'attache d'un organe de rappel de l'ensemble de distalisation formé par la tige coudée
19 : bras antéro-postérieur
20 : articulation associant le bras antéro-postérieur (19) avec la tête de fixation avant (15)
21 : articulation associant le bras antéro-postérieur (19) avec l'accessoire de montage (13) fixé sur la face vestibulaire (V) de la bague (3)

## Revendications

1. Un kit comprenant :
i. au moins un appareil d'orthodontie (1) qui cumule les fonctions de disjoncteur et de distaleur, lequel est apte à s'adapter sur le maxillaire d'un patient et comprend :
A) au moins un écarteur (2) central intégrant une vis d'expansion (4) permettant son écartement et celle, consécutive, de l'arcade maxillaire (AM) du patient, lequel écarteur (2) central est solidaire de :
A1) Un premier couple symétrique de bras de rétention postérieurs (5), dont chaque bras de rétention (5) est couplé à une bague (3) d'un premier couple de bagues (3) permettant la fixation de l'appareil (1) sur des molaires définitives droite et gauche de l'arcade maxillaire (AM) du patient,
A2) Au moins un couple symétrique de bras de rétention antérieurs (8) qui vient en appui sur la face palatine de dents en avant des molaires droite et gauche auxquelles sont fixées le premier couple de bagues (3) droite et gauche ;
**Caractérisé**
**en ce que** ledit A) au moins un écarteur (2) central de l'au moins un appareil d'orthodontie (1) est :
- tel que chaque bras de rétention (5) du premier couple symétrique de bras de rétention postérieurs (5) comprend un ou plusieurs de points de rupture prédéterminés dans sa longueur, et
- également solidaire de :
A3) Un second couple symétrique de bras de rétention postérieurs (6), dont chaque bras de rétention (6) est formé de deux segments distincts avec un premier segment couplé à une bague (3) du premier couple de bagues (3) et un second segment couplé à l'écarteur (2) central, lesquels premier et second segment sont associés par une articulation (7) ; et
**en ce que** ledit au moins un appareil d'orthodontie (1) comprend en outre :
B) au moins un ensemble pour la distalisation (12) tel que :
- au moins une des bagues (3) du premier couple de bagues (3) constitue également l'élément distal dudit l'ensemble pour la distalisation (12) d'une succession de plusieurs dents à partir de la molaire sur laquelle est fixée cette bague (3),
- il comprend au moins deux éléments, avec alternativement :
1) un élément distal comprenant une bague (3), du premier couple de bagues (3), configurée pour être fixée sur la molaire avec, sur sa face vestibulaire, un boitier d'accouplement, et un élément mésial qui peut être fixé par sa base à une canine en avant de la molaire, lequel élément mésial comprend une saillie antérieure ayant une partie extérieure qui permet la rétention de D) l'au moins un organe de rappel et une saillie postérieure arquée terminée par une articulation sphérique à son bout, où l'articulation sphérique de l'élément mésial est introduite dans le boitier d'accouplement de l'élément distal ; ou
2) un élément distal, correspondant à la tête arrière de l'ensemble de distalisation (12), comprenant une bague (3), du premier couple de bagues (3), et configurée pour être fixée sur la molaire et pourvue, sur sa surface vestibulaire, d'un accessoire de montage (13) qui comporte un fourreau (14) ; une tête de fixation avant (15) qui comprend une platine d'adaptation (16) sur une canine et une tige coudée (17) qui porte cette platine (16) ; et un élément intermédiaire comprenant un bras antéro-postérieur (19) et deux articulations (20,21) à l'opposé l'une de l'autre sur le bras antéro-postérieur dont une articulation (20) associe le bras antéro-postérieur (19) avec la tête de fixation avant (15) et l'autre articulation (21) associe le bras antéro-postérieur (19) avec l'accessoire de montage (13) fixé sur la face vestibulaire (V) de la bague (3),
**et en ce que** ledit kit comprend en outre:
ii. au moins un élément de retenue destiné à être fixé à une dent de la mandibule, et
iii. au moins un organe de rappel destiné à coupler l'ensemble de distalisation (12) et l'élément de retenue pour permettre la distalisation.

2. Le kit selon la revendication 1, **caractérisé en ce que** chaque articulation (7) de l'au moins un appareil d'orthodontie (1) prend la forme d'une rotule (7) et, de préférence d'une rotule sphérique (7).

3. Le kit selon l'une quelconque des revendications 1 ou 2, **caractérisé en ce que** chaque bras de rétention (5) du A1) premier couple symétrique de bras de rétention postérieurs (5) de l'au moins un appareil d'orthodontie (1) comprend au moins deux points de rupture prédéterminés avec un premier localisé à proximité de l'écarteur (2) central et un second localisé à proximité de la bague (3) à laquelle est couplé ce bras de rétention (5).

4. Le kit selon l'une quelconque des revendications 1 à 3, **caractérisé en ce que** les bras de rétention (postérieur (5) et antérieur (8)) gauches et/ou les bras de rétention (postérieur (5) et antérieur (8)) droits de l'au moins un appareil d'orthodontie (1) sont reliés par un fil de renfort palatin (9).

5. Le kit selon la revendication 4, **caractérisé en ce que** ledit fil de renfort palatin (9) de l'au moins un appareil d'orthodontie (1) comprend un ou plusieurs de points de rupture prédéterminés dans sa longueur.

6. Le kit selon l'une quelconque des revendications 4 ou 5, **caractérisé en ce que** l'appui du couple de bras de rétention antérieurs (8) de l'au moins un appareil d'orthodontie (1) prend la forme d'un prolongement (10) du fil de renfort palatin (9) en avant du bras de rétention antérieur (8).

7. Le kit selon l'une quelconque des revendications 1 à 6, **caractérisé en ce que** l'au moins un ensemble pour la distalisation (12) de l'appareil d'orthodontie (1) comprend un élément distal comprenant une bague (3) du premier couple de bagues (3) configurée pour être fixée sur la molaire avec, sur sa face vestibulaire, un boitier d'accouplement, et un élément mésial qui peut être fixé par sa base à une canine en avant de la molaire, lequel élément mésial comprend une saillie antérieure ayant une partie extérieure qui permet la rétention de ii) l'au moins un organe de rappel et une saillie postérieure arquée terminée par une articulation sphérique à son bout où l'articulation sphérique de l'élément mésial est introduite dans le boitier d'accouplement de l'élément distal.

8. Le kit selon l'une quelconque des revendications 1 à 6, **caractérisé en ce que** l'au moins un ensemble pour la distalisation (12) comprend :
1) un élément distal, correspondant à la tête arrière de l'ensemble de distalisation (12), comprenant une bague (3) du premier couple de bagues (3) configurée pour être fixée sur la molaire et pourvue, sur sa surface vestibulaire, d'un accessoire de montage (13) qui comporte un fourreau (14) ;
2) une tête de fixation avant (15) qui comprend une platine d'adaptation (16) sur une canine et une tige coudée (17) qui porte cette platine ; et
3) un élément intermédiaire comprenant un bras antéro-postérieur (19) et deux articulations (20,21) à l'opposé l'une de l'autre sur le bras antéro-postérieur dont une articulation (20) associe le bras antéro-postérieur (19) avec la tête de fixation avant (15) et l'autre articulation (21) associe le bras antéro-postérieur (19) avec l'accessoire de montage (13) fixé sur la face vestibulaire (V) de la bague (3).

9. Un kit selon l'une quelconque des revendications 1 à 8, **caractérisé en ce que** :
i. l'au moins un élément de retenue destiné à être fixé à une dent de la mandibule prend la forme d'une platine de montage avec un crochet, et
ii. l'au moins un organe de rappel destiné à coupler l'ensemble de distalisation et l'élément de retenue pour permettre la distalisation prend la forme d'un élastique.

10. Un appareil d'orthodontie (1) tel que défini à l'une quelconque des revendications 1 à 8 qui cumule les fonctions de disjoncteur et de distaleur.

## Patentansprüche

1. Kit, das Folgendes umfasst:
i. mindestens ein kieferorthopädisches Gerät (1), das die Funktionen eines Distraktors und eines Distalisers vereint, welches in der Lage ist, sich an den Oberkiefer eines Patienten anzupassen und umfasst:
A) mindestens einen zentralen Spreizer (2), der eine Expansionsschraube (4) integriert, die dessen Auseinanderdrücken und das darauf folgende Auseinanderdrücken des Oberkieferbogens (AM) des Patienten ermöglicht, wobei der zentrale Spreizer (2) fest mit Folgendem verbunden ist:
A1) einem ersten symmetrischen Paar hinterer Haltearme (5), wobei jeder Haltearm (5) mit einem Ring (3) eines ersten Paares aus Ringen (3) gekoppelt ist, die die Befestigung des Geräts (1) an den rechten und linken bleibenden Molaren des Oberkieferbogens (AM) des Patienten ermöglichen,
A2) mindestens einem symmetrischen Paar vorderer Haltearme (8), die auf der palatinalen Zahnfläche vor den rechten und linken Molaren aufliegen, an denen das erste Paar rechter und linker Ringe (3) befestigt ist;
**dadurch gekennzeichnet,**
**dass** der A) mindestens einen zentralen Spreizer (2) des mindestens einen kieferorthopädischen Geräts (1):
- so ist, dass jeder Haltearm (5) des ersten symmetrischen Paares hinterer Haltearme (5) eine oder mehrere vorbestimmte Sollbruchstellen entlang seiner Länge umfasst, und
- ebenfalls mit Folgendem fest verbunden ist:
A3) einem zweiten symmetrischen Paar hinterer Haltearme (6), wobei jeder Haltearm (6) aus zwei separaten Segmenten ausgebildet ist, wobei ein erstes Segment mit einem Ring (3) des ersten Ringpaares (3) gekoppelt ist und ein zweites Segment mit dem mittleren Abstandshalter (2) gekoppelt ist, wobei das erste und das zweite Segment durch ein Gelenk (7) verbunden sind; und
**dass** das mindestens eine kieferorthopädische Gerät (1) ferner Folgendes umfasst:
B) mindestens eine Anordnung zur Distalisierung (12), wobei:
- mindestens einer der Ringe (3) des ersten Ringpaares (3) auch das distale Element der Anordnung für die Distalisierung (12) einer Reihe von mehreren Zähnen ab dem Molar bildet, an dem dieser Ring (3) befestigt ist,
- sie mindestens zwei Elemente umfasst, alternativ mit:
1) einem distalen Element, das einen Ring (3) des ersten Ringspaares (3) umfasst, der so konfiguriert ist, dass er an dem Molar befestigt wird, mit einem Kupplungsgehäuse auf seiner vestibulären Fläche, und einem mesialen Element, das mit seiner Basis an einem Eckzahn vor dem Molaren befestigt werden kann, wobei das mesiale Element einen vorderen Vorsprung umfasst, der einen äußeren Teil aufweist, der die Halterung von D) dem mindestens einen Halteelement ermöglicht, und einen hinteren gebogenen Vorsprung, der an seinem Ende mit einem Kugelgelenk endet, wobei das Kugelgelenk des mesialen Elements in das Kupplungsgehäuse des distalen Elements eingeführt wird; oder
2) einem distalen Element, das dem hinteren Kopf der Distalisierungsanordnung (12) entspricht, einen Ring (3) des ersten Ringspaares (3) umfasst und so konfiguriert ist, dass es an dem Molaren befestigt werden kann, und auf seiner vestibulären Fläche mit einem Montagezubehör (13) versehen ist, das eine Hülse (14) umfasst; einem vorderen Befestigungskopf (15), der eine Anpassungsplatte (16) für einen Eckzahn und einen gebogenen Stab (17) umfasst, der diese Platte (16) trägt; und einem Zwischenelement, das einen anterior-posterioren Arm (19) und zwei Gelenke (20, 21) umfasst, die sich auf dem anterior-posterioren Arm gegenüberliegen, wobei ein Gelenk (20) den anterior-posterioren Arm (19) mit dem vorderen Befestigungskopf (15) verbindet und das andere Gelenk (21) den anterior-posterioren Arm (19) mit dem befestigten Montagezubehör (13) verbindet, das auf der vestibulären Fläche (V) des Rings (3) befestigt ist,
**und dadurch, dass** das Kit ferner Folgendes umfasst:
ii. mindestens ein Halteelement, das an einem Zahn des Unterkiefers befestigt werden soll, und
iii. mindestens ein Halteelement, das die Distalisierungsanordnung (12) und das Halteelement koppeln soll, um die Distalisierung zu ermöglichen.

2. Kit gemäß Anspruch 1, **gekennzeichnet dadurch, dass** jedes Gelenk (7) des mindestens einen kieferorthopädischen Geräts (1) die Form eines Drehgelenks (7) und vorzugsweise eines Kugelgelenks (7) annimmt.

3. Kit gemäß einem der Ansprüche 1 oder 2, **dadurch gekennzeichnet, dass** jeder Haltearm (5) des A1) ersten symmetrischen Paares hinterer Haltearme (5) des mindestens einen kieferorthopädischen Geräts (1) mindestens zwei vordefinierte Sollbruchstellen umfasst, wobei eine erste in der Nähe des zentralen Spreizers (2) und eine zweite in der Nähe des Rings (3) lokalisiert ist, an den dieser Haltearm (5) gekoppelt ist.

4. Das Set gemäß einem der Ansprüche 1 bis 3, **dadurch gekennzeichnet, dass** die linken Haltearme (hinterer (5) und vorderer (8)) und/oder die rechten Haltearme (hinterer (5) und vorderer (8)) des mindestens einen kieferorthopädischen Geräts (1) durch einen palatinalen Verstärkungsdraht (9) verbunden sind.

5. Kit gemäß Anspruch 4, **dadurch gekennzeichnet, dass** der palatinale Verstärkungsdraht (9) des mindestens einen kieferorthopädischen Geräts (1) entlang seiner Länge eine oder mehrere vordefinierte Sollbruchstellen umfasst.

6. Kit gemäß einem der Ansprüche 4 oder 5, **dadurch gekennzeichnet, dass** die Auflage des Paares vorderer Haltearme (8) des mindestens einen kieferorthopädischen Geräts (1) die Form einer Verlängerung (10) des palatinalen Verstärkungsdrahts (9) vor dem vorderen Haltearm (8) annimmt.

7. Kit gemäß einem der Ansprüche 1 bis 6, **dadurch gekennzeichnet, dass** die mindestens eine Anordnung zur Distalisierung (12) des kieferorthopädischen Geräts (1) ein distales Element, das einen Ring (3) des ersten Ringpaares (3) umfasst, der so konfiguriert ist, dass er an dem Molaren befestigt werden kann, mit einem Kupplungsgehäuse auf seiner vestibulären Fläche, und ein mesiales Element umfasst, das mit seiner Basis an einem Eckzahn vor dem Molaren befestigt werden kann, wobei das mesiale Element einen vorderen Vorsprung umfasst, die einen äußeren Teil aufweist, der die Halterung von ii) dem mindestens einen Halteelement ermöglicht, und einen hinteren gebogene Vorsprung, der an seinem Ende mit einem Kugelgelenk endet, wobei das Kugelgelenk des mesialen Elements in das Kupplungsgehäuse des distalen Elements eingeführt wird.

8. Kit gemäß einem der Ansprüche 1 bis 6, **dadurch gekennzeichnet, dass** die mindestens eine Anordnung zur Distalisierung (12) Folgendes umfasst:
1) ein distales Element, das dem hinteren Kopf der Distalisierungsanordnung (12) entspricht und einen Ring (3) des ersten Ringpaares (3) umfasst, der so konfiguriert ist, dass er an dem Molaren befestigt werden kann, und auf seiner vestibulären Fläche mit einem Montagezubehör (13) versehen ist, das eine Hülse (14) umfasst;
2) einen vorderen Befestigungskopf (15), der eine Anpassungsplatte (16) für einen Eckzahn und einen gebogenen Stab (17) umfasst, der diese Platte trägt; und
3) ein Zwischenelement, das einen anterior-posterioren Arm (19) und zwei Gelenke (20, 21) umfasst, die sich auf dem anterior-posterioren Arm gegenüberliegen, wobei ein Gelenk (20) den anterior-posterioren Arm (19) mit dem vorderen Befestigungskopf (15) verbindet und das andere Gelenk (21) den anterior-posterioren Arm (19) mit dem Montagezubehör (13) verbindet, das auf der vestibulären Fläche (V) des Rings (3) befestigt ist.

9. Kit gemäß einem der Ansprüche 1 bis 8, **dadurch gekennzeichnet, dass:**
i. das mindestens eine Halteelement, das an einem Zahn des Unterkiefers befestigt werden soll, die Form einer Montageplatte mit einem Haken hat, und
ii. das mindestens ein Halteelement, das die Distalisierungsanordnung und das Halteelement koppeln soll, um die Distalisierung zu ermöglichen, die Form eines Gummibands hat.

10. Kieferorthopädisches Gerät (1) gemäß einem der Ansprüche 1 bis 8, das die Funktionen eines Distraktors und eines Distalisers kombiniert.

## Claims

1. A kit comprising:
i. at least one orthodontic appliance (1) which has concurrent expander and distaliser functions, which is capable of being fitted to a patient's maxilla and comprises:
A) at least one central retractor (2) integrating an expansion screw (4) allowing its spreading and that, subsequently, of the patient's maxillary arch (AM), the central retractor (2) being secured to:
A1) A first symmetrical pair of posterior retention arms (5), of which each retention arm (5) is coupled to a ring (3) of a first pair of rings (3) allowing the attachment of the appliance (1) to the right and left permanent molars of the patient's maxillary arch (AM),
A2) At least one symmetrical pair of anterior retention arms (8) which bears on the palatal face of teeth in front of the right and left molars to which the first pair of right and left rings (3) are attached;
**Characterized**
**in that** said A) at least one central retractor (2) of the at least one orthodontic appliance (1) is:
- such that each retention arm (5) of the first symmetrical pair of posterior retaining arms (5) comprises one or more predetermined rupture points in its length, and
- also secured to:
A3) A second symmetrical pair of posterior retention arms (6), of which each retaining arm (6) is formed of two separate segments with a first segment coupled to a ring (3) of the first pair of rings (3) and a second segment coupled to the central retractor (2), the first and second segments being associated by a joint (7); and
**in that** said at least one orthodontic appliance (1) further comprises:
B) at least one distalising assembly (12) such that:
- at least one of the rings (3) of the first pair of rings (3) also forms the distal element of said distalising assembly (12) of a series of several teeth from the molar to which this ring (3) is attached,
- it comprises at least two elements, with alternately:
1) a distal element comprising a ring (3), of the first pair of rings (3), configured to be attached to the molar with, on its vestibular face, a coupling housing, and a mesial element which can be attached by its base to a canine in front of the molar, the mesial element comprising an anterior protrusion having an outer portion which allows the retention of D) the at least one return member and an arcuate posterior protrusion terminated by a spherical joint at its end, where the spherical joint of the mesial element is introduced into the coupling housing of the distal element; or
2) a distal element, corresponding to the rear head of the distalising assembly (12), comprising a ring (3), of the first pair of rings (3), and configured to be attached to the molar and provided, on its vestibular surface, with a mounting accessory (13) which comprises a sleeve (14); a front attachment head (15) which comprises an adaptation plate (16) on a canine and a curved rod (17) which bears this plate (16); and an intermediate element comprising an anterior-posterior arm (19) and two joints (20, 21) opposite each other on the anterior-posterior arm, of which one joint (20) associates the anterior-posterior arm (19) with the front attachment head (15) and the other joint (21) associates the anterior-posterior arm (19) with the mounting accessory (13) attached to the vestibular face (V) the ring (3),
**and in that** said kit further comprises:
ii. at least one retaining element intended to be attached to a tooth of the lower jaw, and
iii. at least one return member intended to couple the distalising assembly (12) and the retaining element to allow distalisation.

2. The kit according to claim 1, **characterised in that** each joint (7) of the at least one orthodontic appliance (1) takes the form of a ball joint (7) and, preferably, a spherical ball joint (7).

3. The kit according to any of claims 1 or 2, **characterised in that** each retention arm (5) of the A1) first symmetrical pair of posterior retention arms (5) of the at least one orthodontic appliance (1) comprises at least two predetermined rupture points with a first located in proximity to the central retractor (2) and a second located in proximity to the ring (3) to which this retention arm (5) is coupled.

4. The kit according to any of claims 1 to 3, **characterised in that** the left (posterior (5) and anterior (8)) retention arms and/or the right (posterior (5) and anterior (8)) retention arms of the at least one orthodontic appliance (1) are connected by a palatal reinforcement wire (9).

5. The kit according to claim 4, **characterised in that** said palatal reinforcement wire (9) of the at least one orthodontic appliance (1) comprises one or more predetermined rupture points in its length.

6. The kit according to any one of claims 4 or 5, **characterised in that** the support of the pair of anterior retention arms (8) of the at least one orthodontic appliance (1) takes the form of an extension (10) of the palatal reinforcement wire (9) in front of the anterior retention arm (8).

7. The kit according to one of claims 1 to 6, **characterised in that** the at least one distalising assembly (12) of the orthodontic appliance (1) comprises a distal element comprising a ring (3) of the first pair of rings (3) configured to be attached to the molar with, on its vestibular face, a coupling housing, and a mesial element which can be attached by its base to a canine in front of the molar, the mesial element comprising an anterior protrusion having an outer portion which allows retention of ii) the at least one return member and an arcuate posterior protrusion terminated by a spherical joint at its end where the spherical joint of the mesial element is introduced into the coupling housing of the distal element.

8. The kit according to any of claims 1 to 6, **characterised in that** the at least one distalising assembly (12) comprises:
1) a distal element, corresponding to the rear head of the distalising assembly (12), comprising a ring (3) of the first pair of rings (3) configured to be attached to the molar and provided, on its vestibular surface, with a mounting accessory (13) which comprises a sleeve (14) ;
2) a front attachment head (15) which comprises an adaptation plate (16) on a canine and a curved rod (17) which bears this plate; and
3) an intermediate element comprising an anterior-posterior arm (19) and two joints (20, 21) opposite each other on the anterior-posterior arm, of which one joint (20) associates the anterior-posterior arm (19) with the front attachment head (15) and the other joint (21) associates the anterior-posterior arm (19) with the mounting accessory (13) attached to the vestibular face (V) of the ring (3) .

9. A kit according to any of claims 1 to 8, **characterised in that:**
i. the at least one retaining element intended to be attached to a tooth of the lower jaw takes the form of a mounting plate with a hook, and
ii. the at least one return member intended to couple the distalising assembly and the retaining element to allow distalisation takes the form of an elastic band.

10. An orthodontic appliance (1) as defined in any of claims 1 to 8 which has concurrent expander and distaliser functions.
